# EUROPÄISCHE PATENTANMELDUNG

(11) **EP 1 857 345 A2**
(43) Veröffentlichungstag der Anmeldung: **21.11.2007**
(21) Anmeldenummer: 07008843.0
(22) Anmeldetag: 02.05.2007
(51) Int. Cl.: B62B 1/10

(54) **Stech- bzw. Sackkarre**

(30) Priorität: 15.05.2006 DE 202006007866 U
(71) Anmelder: Betz, Georg, 92718 Schirmitz (DE); Schmidt, Johann, 92648 Vohenstrauss (DE)
(72) Erfinder: Betz, Georg, 92718 Schirmitz (DE); Schmidt, Johann, 92648 Vohenstrauss (DE)
(74) Vertreter: Kraft, Werner

(57) **Zusammenfassung**

Die Erfindung betrifft eine Stechkarre, auch als Sackkarre bezeichnet, die vorzugsweise für den beschädigungsfreien Transport von Gütern vorgesehen ist, beispielsweise von unverpackten Haushaltsgeräten, nämlich Waschmaschinen, Kühlschränken und dgl.. Erfindungsgemäß sind die Holme, Querstreben und/oder das Tragschild der Stechkarre in ausreichender Anzahl mit Polsteraufnahmen versehen, auf die auswechselbare Polster aufgesteckt sind. Die Polster sind in Material, Form und Dämpfungswirkung frei definierbar. Dadurch sind gepolsterte Anlagepunkte für das zu transportierende Gut gebildet. Diese Anlagepunkte liegen sämtlich in einer Ebene.

Zweckmäßigerweise sind die Polsteraufnahmen aus zwei rechtwinklig zueinander stehenden Schenkeln gebildet. Die Polsteraufnahmen sind fest oder veränderlich, beispielsweise schwenkbar, an den Holmen, gegebenenfalls auch an den Querstreben, angebracht. Der horizontale wie auch der vertikale Abstand der Polsteraufnahmen zueinander ist an Praxisanforderungen orientiert festzulegen.

Wie oben erwähnt kann auch das bodenseitige Tragschild mit Polsteraufnahmen, die aus einem geeigneten Einzelprofil bestehen, versehen sein.

## Beschreibung

Die Erfindung betrifft eine Stechkarre, auch als Sackkarre bezeichnet, die vorzugsweise für den beschädigungsfreien Transport von Gütern vorgesehen ist, beispielsweise von unverpackten Haushaltsgeräten, nämlich Waschmaschinen, Kühlschränken und dgl..

### Stand der Technik

Stechkarren sind seit langem bekannt und sehr umfangreich im Praxiseinsatz.
Sie bestehen im Wesentlichen aus einem Grundgestell mit zwei Holmen mit endseitigen Handgriffen, die Holme verbindenden Querstreben, an den Holmen angebrachten Rädern und einem die Last untergreifenden bodenseitigen Tragschild. Weiterhin sind verschiedentlich rückseitige Stützen zum Abstellen der Stechkarre mit oder ohne Last vorhanden.
Die Bauteile sind abgesehen von der Bereifung der Räder aus Stahl oder Aluminium gefertigt. Daraus ergibt sich ein Problem beim Transport von empfindlichen Gütern, insbesondere solchen, die unverpackt transportiert werden müssen, beispielsweise Haushaltsgeräte. Für diese Transportgüter ist eine latente Gefahr von Lack- und anderen Beschädigungen vorhanden.

Um Beschädigungen zu vermeiden wurden verschiedentlich Beilagen aus unterschiedlichen Materialien zwischen dem Transportgut und den entsprechenden Stellen der Karre platziert. Diese können sich allerdings während des Transports verschieben und sind von daher nicht optimal.
Auch wurden die Holme und/oder die Querstreben mit geeigneten polsternden Materialien versehen. Da Beschädigungen an den Polstermaterialien aber auf Grund der schweren Transportgüter nicht zu vermeiden sind, müssen diese in gewissen Abständen ausgewechselt werden, was problematisch ist.
Beide Maßnahmen sind daher als unprofessionell einzustufen.
Der beschriebene Mangel soll durch die Erfindung beseitigt werden.

Es ist eine gattungsgemäße Stech- bzw. Sackkarre zu entwickeln, mit der zwar schwere aber doch leicht zu beschädigende Transportgüter transportierbar sind. Insbesondere ist die Entstehung von Lackschäden sicher zu vermeiden.

Die Lösung der Aufgabenstellung ist im Patentanspruch 1 angegeben.
Die untergeordneten Ansprüche enthalten zweckmäßige Ausgestaltungen dieses Hauptanspruchs.

Üblicherweise besteht eine Stechkarre aus zwei Holmen mit endseitigen Handgriffen.
Die Holme sind durch mehrere Querstreben miteinander verbunden. Weiterhin ist die Karre mit zwei Rädern ausgestattet, die entweder auf einer durchgehenden Achse oder einzeln gelagert sind. Schließlich ist ein bodenseitiges Tragschild, mit dem die Last untergreifbar ist, mit den Holmen verbunden. Als zweckmäßige Ausstattung kann die Stechkarre mit rückseitigen Stützen zum Abstellen mit oder ohne Last versehen sein.

Erfindungsgemäß sind die Holme, Querstreben und/oder das Tragschild der Stechkarre in ausreichender Anzahl mit Polsteraufnahmen versehen, auf die auswechselbare Polster aufgesteckt sind. Die Polster sind in Material, Form und Dämpfungswirkung frei definierbar. Dadurch sind gepolsterte Anlagepunkte für das zu transportierende Gut gebildet. Diese Anlagepunkte liegen sämtlich in einer Ebene.
Zweckmäßigerweise sind die Polsteraufnahmen aus zwei rechtwinklig zueinander stehenden Schenkeln gebildet. Die Polsteraufnahmen sind fest oder veränderlich, beispielsweise schwenkbar, an den Holmen, gegebenenfalls auch an den Querstreben, angebracht. Der horizontale wie auch der vertikale Abstand der Polsteraufnahmen zueinander ist an Praxisanforderungen orientiert festzulegen.
Wie oben erwähnt kann auch das bodenseitige Tragschild mit Polsteraufnahmen, die aus einem geeigneten Einzelprofil bestehen, versehen sein.

Somit ist mit einfachen technischen Mitteln eine Stechkarre gebildet, mit der schwere Güter beschädigungsfrei transportierbar sind. Lackschäden sind vermeidbar.

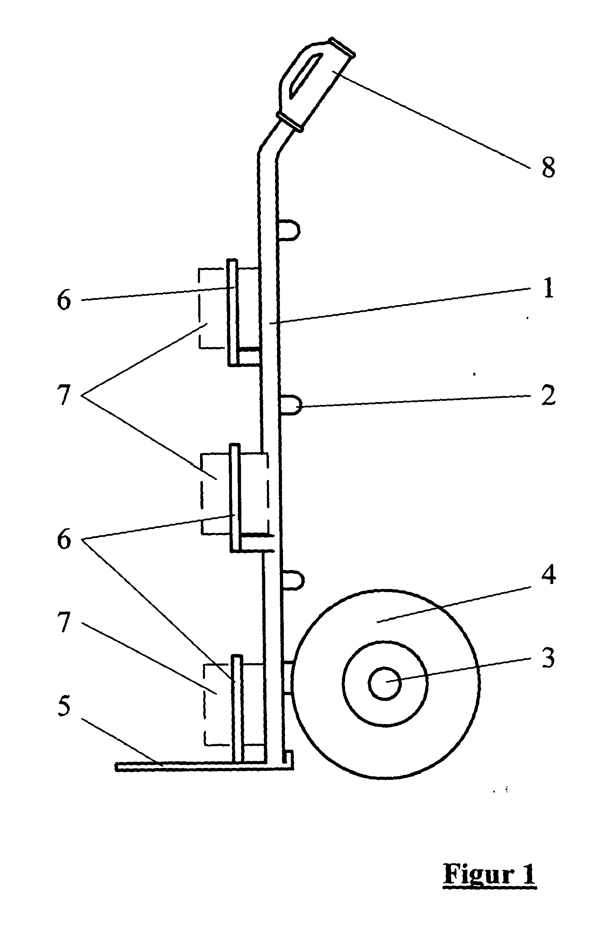

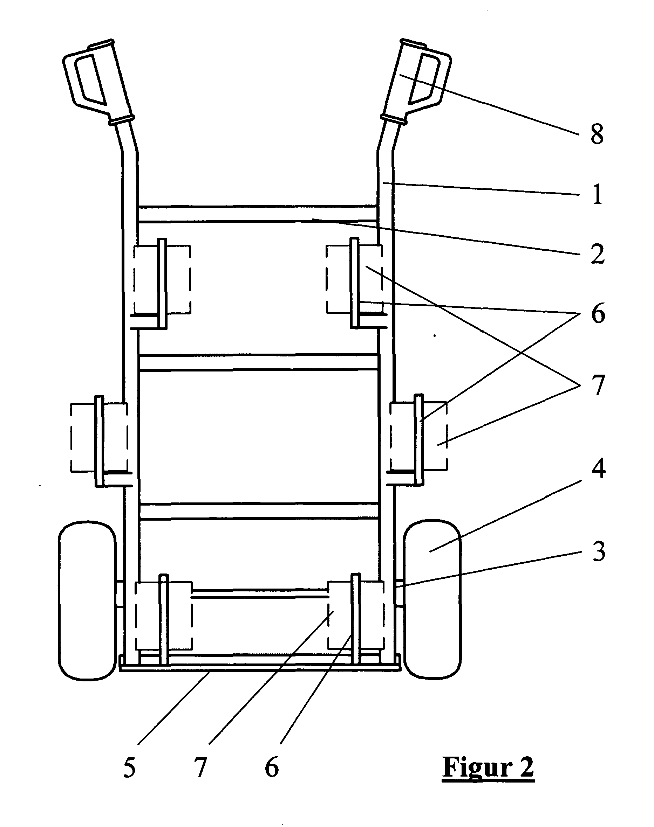

Im nachfolgenden Ausführungsbeispiel ist eine Stechkarre der erfindungsgemäßen Art an Hand von Zeichnungen näher erläutert, und zwar in Figur 1 als Seiten- und in Figur 2 als Vorderansicht.
Die verwendeten Bezugszeichen bedeuten:

### Bezugszeichenliste

- 1: Holm,
- 2: Querstrebe,
- 3: Achse,
- 4: Rad,
- 5: Tragschild,
- 6: Polsteraufnahme,
- 7: Polster
- 8: Handgriff.

Im vorgestellten Beispiel sind die Holme 1 der Stechkarre jeweils mit zwei winkelartigen Polsteraufnahmen 6 verschweißt. Zusätzlich ist das Tragschild 5 mit Polsteraufnahmen 6, die allerdings nicht winklig ausgeführt sind, versehen. Alle Polsteraufnahmen 6 tragen Polster 7. Diese sind zylindrige Schaumstoffkörper, die ohne besondere Befestigung lediglich auf die Polsteraufnahmen 6 aufgesteckt sind. Die Befestigungspunkte der Polsteraufnahmen 6 an den Holmen 1 sind frei wählbar.
Im gewählten Beispiel stehen insgesamt sechs Anlagepunkte für das Transportgut und zwar in drei horizontalen Ebenen zur Verfügung, wobei die Anlagepunkte vertikal in einer Ebene liegen. Das Ausführungsbeispiel zeigt eine Variante bei der der horizontale Abstand der Polsteraufnahmen 6 in der mittleren Ebene größer als der in den anderen beiden Ebenen ist. Ein Abstandsmaß zwischen 100 und 800 mm hat sich als zweckmäßig herausgestellt.

Um Wiederholungen zu vermeiden, wird im Übrigen auf die Ausführungen in der voranstehenden Beschreibung verwiesen.

## Patentansprüche

1. Stech- bzw. Sackkarre, im Wesentlichen bestehend aus einem Grundgestell mit zwei Holmen mit endseitigen Handgriffen, die Holme verbindenden Querstreben, an den Holmen angebrachten Rädern, einem die Last untergreifenden bodenseitigen Tragschild und optional rückseitig angebrachten Stützen zum Abstellen der Stechkarre mit oder ohne Last, **dadurch gekennzeichnet, dass** Polsteraufnahmen (6) an den Holmen (1), an den Querstreben (2) und/oder dem bodenseitigen Tragschild (5) angebracht sind,
die auswechselbare Polster (7) tragen, wodurch gepolsterte in einer Ebene liegende Anlagepunkte für das zu transportierende Gut gebildet sind.

2. Stech- bzw. Sackkarre nach Anspruch 1, **dadurch gekennzeichnet, dass** eine veränderliche, beispielsweise schwenkbare Anbringung wenigstens einer, vorteilhaft aber einiger oder aller Polsteraufnahmen (6) gewählt ist.

3. Stech- bzw. Sackkarre nach Anspruch 1, **dadurch gekennzeichnet, dass** die Polster (7) in Material, Form und Dämpfungswirkung frei definierbar, vorzugsweise aber zylindrige Schaumstoffkörper sind, die ohne besondere Befestigung lediglich auf die Polsteraufnahmen (6) aufgesteckt sind.

4. Stech- bzw. Sackkarre nach Anspruch 1, **dadurch gekennzeichnet, dass** die an den Holmen (1) oder Querstreben (2) fest oder schwenkbar angebrachten Polsteraufnahmen (6) aus zwei rechtwinklig zueinander stehenden Schenkeln gebildet sind, während die auf dem bodenseitige Tragschild (5) befindlichen Polsteraufnahmen (6) aus einem Einzelprofil, zum Beispiel einem Rohrstück oder einem Rundstahl, bestehen.
Es folgen zwei Blätter Zeichnungen (Figur 1 und 2)!
